# EUROPÄISCHE PATENTANMELDUNG

(11) **EP 2 138 885 A1**
(43) Veröffentlichungstag der Anmeldung: **30.12.2009**
(21) Anmeldenummer: 08104502.3
(22) Anmeldetag: 23.06.2008
(51) Int. Cl.: G02B 23/10

(54) **Beobachtungsgerät& xA;**

(71) Anmelder: Vectronix AG, 9435 Heerbrugg (CH)
(72) Erfinder: Schoenenberger, Bernhard, CH-9445, Rebstein (CH); Leblanc, Richard A., Clermont, FL 34715 (US); Wälti, Felix, CH-9437, Marbach (CH); Drach, Patrick, CH-9425, Thal (CH); Zeller, Marcel, CH-9436, Balgach (CH)
(74) Vertreter: Kaminski Harmann

(57) **Zusammenfassung**

Die Erfindung betrifft ein Beobachtungsgerät mit mindestens einem Tagsichtkanal (2), einem Informationskanal (3) - mit einem grafischen elektronischen Display (4) zur Erzeugung eines Displaybildes - und einer Kombinationsoptik (5) zur Zusammenführung des Tagsichtkanals (2) und des Informationskanals (3), sodass ein kombiniertes Gesamtbild (6) entsteht.

Erfindungsgemäss ist dabei die Kombinationsoptik (5) derart ausgebildet und angeordnet, dass das Gesamtbild (6) aufgeteilt ist in einen Tagsicht-Display-Bereich (7) und einen ausschliesslichen Displaybereich (8).

In dem Tagsicht-Display-Bereich (7) ist dabei
- alternativ wählbar das Tagsichtbild oder ein erster Teil des Displaybilds, und/oder
- eine Überlagerung aus mindestens einem Teil des Tagsichtbildes mit dem ersten Teil des Displaybildes anzeigbar.

Hingegen wird im ausschliesslichen Displaybereich (8) nur ein zweiter Teil des Displaybildes ohne Überlagerung mit dem Tagsichtbild bereitgestellt, sodass dort eingespielte Informationen klar und deutlich erkennbar sind.

## Beschreibung

Die Erfindung betrifft ein Beobachtungsgerät mit einem elektronischen Display zum Bereitstellen von Zusatzinformation nach dem Oberbegriff des Anspruchs 1.

Leistungsfähige Beobachtungsgeräte kommen insbesondere für militärische oder geodätische Zwecke zum Einsatz. Dabei ist wichtig, dass die Geräte handlich, schnell und einfach zu bedienen sowie möglichst kompakt und leicht sind. Während es früher üblich war, mehrere Geräte für verschiedene Zwecke einzusetzen, werden heute bevorzugt kombinierte, multifunktionale Geräte verwendet. Dies ist in vielerlei Hinsicht vorteilhaft, so wird z.B. ein Mittragen von mehreren Geräten überflüssig und ein wesentlich schnellerer Wechsel zwischen den Funktionen ermöglicht.

Beispielsweise können derartige Geräte - zusätzlich zur Tagbeobachtungsfunktion - als weitere Funktionen aufweisen: Zielmarken für militärische Anwendungen oder zu Jagdzwecken, integrierte Entfernungs- und Richtungsmesser, ein elektronisches Display zum Bereitstellen von Zusatzinformation - insbesondere wobei ein Displaybild mit dem Tagsichtbild überlagerbar ist -, eine Nachtsichtfunktion, etc. Dadurch ist es z.B. möglich, ein Bild einer Kamera, Standortinformation beispielsweise in Form einer Karte, gemessene Entfernungen oder Richtungen, gespeicherte Informationen bzgl. eines anvisierten Zielobjekts - wie z.B. Verwundbarkeitsstellen eines feindlichen Panzers - oder Temperatur- und Wetterinformationen anhand des elektronischen Displays dem Benutzer bereitzustellen. Insbesondere sind diese Geräte oft in Form von Ferngläsern bzw. Feldstechern mit den genannten Spezialfunktionen für jeweilige spezielle Verwendungszwecke ausgebildet.

Für ein Gerät mit sowohl Tagsicht- als auch Displaybildfunktion ist im Allgemeinen ein Aufbau mit zwei getrennten Kanälen - einem Tagsichtkanal und einem Informationskanal - üblich. Der Tagsichtkanal wird dabei im Allgemeinen in bekannter Art und Weise fernrohrartig aus Objektiv und optischen brechenden und reflektiven Elementen gebildet. Der Informationskanal weist im Üblichen eine elektronische Anzeige/Display und eine nachgeschaltete Displayoptik auf. Als Display kann dafür verwendet werden z.B. ein Liquid Crystal Display (LCD), ein Display aus organischen oder anorganischen Leuchtdioden (OLED- bzw. LED-Display), ein verhältnismässig leuchtstarkes kontrastreiches Liquid Crystal on Silicon Display (LCoS-Display), ein Digital Micromirror Display (DMD), etc. Zur Zusammenführung des Tagsicht- und des Informationskanals bzw. zur Überlagerung des Tagsichtbildes mit dem Displaybild werden insbesondere Strahlteiler verwendet. Das dadurch entstehende kombinierte Gesamtbild kann dann über ein Okular ins Auge eines Beobachters projiziert werden.

Für den Einsatz solcher Beobachtungsgeräte im Feld ist dabei insbesondere auf einen niedrigen Energieverbrauch, eine hohe Kompaktheit und ein geringes Gewicht des Geräts zu achten. So kann die maximale Betriebszeit eines Feldstechers mit Displayfunktion je nach bereitgestellter Batterie- oder Akkumulatorleistung von wenigen Stunden bis zu mehreren Tagen betragen.

Zur Gewährleistung eines geringen Energieverbrauchs ist insbesondere der Einsatz von energiesparsamen Displays vorteilhaft.

Gegen den Einsatz solcher Energie-Spar-Displays spricht allerdings, dass diese auch eine verhältnismässig geringe Helligkeit und einen verhältnismässig geringen Kontrast aufweisen. Insbesondere bei Überlagerung des Displaybildes mit dem Tagsichtbild können die Zusatzinformationen dabei oft nicht klar und deutlich, sondern - wenn überhaupt - nur erschwert erkannt werden.

Zur Lösung dieses Zielkonfliktes, nämlich möglichst klar und deutlich dargestellte Zusatzinformationen mit einem Tagsichtbild zu kombinieren und dabei eine möglichst geringe Energiekonsumption aufzuweisen, sind bisher verschiedene Ansätze bekannt.

Beispielsweise können zwei verschiedene, im Displaykanal nebeneinander angeordnete Displays verwendet werden, wobei eines der beiden ein sehr helles Bild und das andere ein weniger helles Bild erzeugt. Somit kann beispielsweise Information in Textform mit dem hellen und kontrastreichen - jedoch auch einen hohen Energieverbrauch aufweisenden - Display angezeigt und hingegen Informationen, die zur klaren Erkennbarkeit einen verhältnismässig geringen Kontrast gegenüber dem Tagsichtbild erfordern, anhand des Energiespar-Displays eingespielt werden.

Nachteilig bei dieser Lösung ist jedoch der aufwändige und komplizierte Einbau von zwei unterschiedlichen Displays sowie dass - bei einem Anzeigen von Information mit dem helleren Display - verhältnismässig viel Energie benötigt wird, wobei dies wiederum zu einer kurzen Betriebsdauer führt und/oder den Einsatz von grossen und schweren Batterien bzw. Akkumulatoren fordert.

Es ist daher eine Aufgabe der vorliegenden Erfindung, ein Beobachtungsgerät mit elektronischem Display zur Einspielung von Zusatzinformation bereitzustellen, wobei das Display einen verhältnismässig geringen Energieverbrauch aufweist und dennoch ein klares und deutliches Gesamtbild aus Tagsicht- und Displaybild zur Verfügung gestellt werden kann, insbesondere wobei die optische Komplexität des Beobachtungsgeräts gering gehalten wird.

Diese Aufgabe wird durch die Verwirklichung der kennzeichnenden Merkmale der unabhängigen Ansprüche gelöst. Merkmale, die die Erfindung in alternativer oder vorteilhafter Weise weiterbilden, sind den abhängigen Patentansprüchen zu entnehmen.

Zur Bereitstellung eines Beobachtungsgerätes mit verbessert gelöstem Zielkonflikt, nämlich möglichst klar und deutlich Zusatzinformationen mit einem Tagsichtbild zu kombinieren und dabei einen möglichst geringen Energieverbrauch aufzuweisen, wird erfindungsgemäss eine Anzeige eines kombinierten Gesamtbilds aus Tagsichtbild und Displaybild ermöglicht, das zwei voneinander getrennte Teilbereiche aufweist. Dazu ist eine zwei Zonen aufweisende Kombinationsoptik zur Zusammenführung von Tagsichtkanal und Informationskanal - in dem das einen verhältnismässig geringen Energieverbrauch aufweisende elektronische Display angeordnet ist - vorgesehen, wobei durch die beiden Zonen die Zusammenführung der beiden Kanäle unterschiedlich erfolgt.

Durch die erste Zone der Kombinationsoptik, die zur Erzeugung des Tagsicht-Display-Bereichs des Gesamtbildes ausgebildet ist, ist dabei das Bild aus dem Tagsichtkanal - bzw. mindestens ein Grossteil des Tagsichtbildes - mit einem ersten Teil des Displaybildes überlagerbar. Zusätzlich kann durch die erste Zone - z.B. bei ausgeschaltetem Display - ausschliesslich ein Tagsichtbild bereitgestellt werden.

Durch die zweite Zone der Kombinationsoptik wird hingegen ausschliesslich ein zweiter Teil des Displaybildes im reinen Displaybereich des Gesamtbildes bereitgestellt. In diesem Bereich - dem ausschliesslichen Displaybereich - erfolgt keine Überlagerung mit dem im Allgemeinen sehr hellen Tagsichtbild, sodass eine deutliche Darstellung der im zweiten Teil des Displaybildes bereitgestellten Informationen ermöglicht ist.

Dadurch wird ein in zwei Teilbereiche aufgeteiltes Gesamtbild erzeugt, wobei im ersten Teilbereich - nämlich dem Überlagerungsbereich oder Tagsicht-Display-Bereich - insbesondere ein Überlagerungsbild aus Displaykanal und Informationskanal, hingegen im zweiten Teilbereich - dem reinen Displaybereich - ausschliesslich ein Teil des Displaybildes angezeigt wird. Vorzugsweise sind dabei sämtliche Optiken des Beobachtungsgeräts - insbesondere die Kombinationsoptik und eine optional vorgesehene Strichplatte zur Bereitstellung von Azimut- und/oder Elevationswinkel - derart angeordnet und ausgebildet, sodass zwischen dem Tagsicht-Display-Bereich und dem ausschliesslichen Displaybereich eine scharfe Grenze vorhanden ist, d.h., sodass ein scharfer Übergang vom ersten Teilbereich in den zweiten Teilbereich des kombinierten Gesamtbilds erzeugt wird.

Trotz Einsatz eines verhältnismässig leistungsschwachen und somit energiesparenden Displays können erfindungsgemäss nun im zweiten Teilbereich des Gesamtbildes Informationen - wie z.B. Text - genügend kontrastreich und somit klar und deutlich angezeigt werden. Dies wird dadurch gewährleistet, dass in diesem Informations-Teilbereich des kombinierten Gesamtbildes kein das Displaybild in der Helligkeit deutlich übersteigendes Tagsichtbild überlagert wird. Dennoch können - bei Bedarf - auch im ersten Teilbereich Informationen in das dort bereitgestellte Tagsichtbild eingespielt werden, insbesondere Informationen solcher Art, die auch bei weniger hohem Kontrast leicht zu erkennen sind.

Zusätzlich kann erfindungsgemäss - z.B. bei Dunkelheit oder verschlossenem Tagsichtkanal - über den gesamten Anzeigebereich das Displaybild zusammenhängend bereitgestellt werden, sodass als das kombinierte Gesamtbild das zusammenhängende gesamte Displaybild in das Auge eines Beobachters projiziert wird. Dieser Modus kann insbesondere zur Darstellung einer Karte oder zur Bereitstellung eines Wärmebildes oder Nachtsicht-Bildes verwendet werden. Dafür kann am Beobachtungsgerät - wie nach dem Stand der Technik hinlänglich bekannt - ein weiterer Kanal vorgesehen sein - beispielsweise ein Nachtsichtkanal mit z.B. Infrarot-Lichtsensor und Restlichtverstärker oder ein Wärmebildkanal mit Wärmebildkamera -, über welchen Strahlung der Umgebung - z.B. Wärmestrahlung, Infrarot-Strahlung oder Restlicht - erfasst und durch das Display dargestellt wird.

Des Weiteren kann erfindungsgemäss im Überlagerungsbereich des Gesamtbildes auch eine Überlagerung des Tagsichtbildes mit einem anhand des Displays angezeigten Wärmebildes oder Nachtsicht-Bildes bereitgestellt werden. Beim der Erzeugung eines solchen Überlagerungsbildes - z.B. während der Dämmerung - ist allerdings darauf zu achten, dass die überlagerten Bilder in ihren Abbildungseigenschaften anzugleichen sind. So können beispielsweise zusätzliche optische Komponenten - wie Vergrösserungslinsen - zum An- bzw. Ausgleichen von Grössenverhältnissen des Display- und des Tagsichtbildes vorgesehen sein. In dieser Ausführungsform ist es dem Beobachter möglich, fusionierte Bilder im Überlagerungsbereich des Gesamtbildes, wie beispielsweise ein überlagertes Tag- und Wärmebild, zu betrachten. Zusätzlich kann dabei durch den zweiten Teil des Displaybildes, welcher im reinen Displaybereich des Gesamtbildes angezeigt wird, klar erkennbare Textinformation eingespielt werden.

Zur erfindungsgemässen Zusammenführung von Tagsichtkanal und Informationskanal - sodass das Gesamtbild in zwei Bereiche (Tagsicht-Display-Bereich und ausschliesslicher Displaybereich) aufgeteilt ist - weist die Kombinationsoptik insbesondere zwei Zonen auf, wobei durch die erste Zone der Tagsicht-Display-Bereich und durch die zweite Zone der reine Displaybereich erzeugt wird.

Beispielsweise kann die zweite Zone der Kombinationsoptik derart ausgebildet und angeordnet sein, sodass aus dem Tagsichtkanal auf dieser zweiten Zone auftreffende Strahlungsinformation am Eintritt in den Anzeigekanal, der sich an die Kombinationsoptik anschliesst und z.B. ein Okular aufweist, gehindert werden. Insbesondere wird dafür die aus dem Tagsichtkanal innerhalb dieser Zone auftreffende Strahlung am Anzeigekanal vorbeigeführt.

Die Kombinationsoptik kann erfindungsgemäss beispielsweise als Strahlteilerprisma mit einer zwischen Tagsichtkanal und Informationskanal angeordneten Kombinationsfläche ausgebildet sein.

Gemäss einer ersten erfindungsgemässen Ausführung des Strahlteilerprismas kann die Kombinationsfläche dabei eine die erste Zone bildende Teilfläche mit einer - z.B. für einen vorgegebenen Wellenlängenbereich - teildurchlässigen bzw. teilweise refelktiven Beschichtung aufweisen. Der restliche Teil der Kombinationsfläche, welcher die zweite Zone bildet, kann - je nach Zusammenführungsweise der Kanäle - z.B. transmittiv oder komplett reflektiv ausgebildet sein, sodass dort auftreffende Strahlungsinformation aus dem Informationskanal vollständig in den Anzeigekanal gelenkt und aus den Tagsichtkanal auftreffende Strahlungsinformation nicht in den Anzeigekanal gelenkt bzw. am Anzeigekanal vorbeigeführt wird.

Alternativ kann die Kombinationsoptik derart ausgebildet sein, sodass sich die erste Zone über den gesamten Querschnitt des Tagsichtkanals, jedoch nicht über den gesamten Querschnitt des Informationskanals erstreckt, sondern nur über einen zur Überlagerung vorgesehenen Teil des Informationskanals. Der Restbereich des Informationskanal-Querschnitts wird hingegen durch die zweite Zone der Kombinationsoptik ausgefüllt, wobei aus dem Informationskanal auf der zweiten Zone einfallende Strahlung vorzugsweise direkt in den Anzeigekanal transmittiert oder gelenkt wird.

Beispielsweise kann dafür ein Strahlteilerprisma mit einer sich über den gesamten Querschnitt des Tagsichtkanals erstreckenden Strahlteilerfläche mit teildurchlässiger Beschichtung eingesetzt werden, wobei sich die Strahlteilerfläche jedoch nicht über den gesamten Querschnitt des Displaykanals erstreckt, sondern nur über einen zum Überlagern mit dem Tagsichtbild vorgesehenen Teil. Im Bereich des restlichen Querschnitts des Informationskanals ist - als zweite Zone der Kombinationsoptik - beispielsweise eine Verlängerung des Prismas angeordnet, wobei das Prisma in dieser Zone keine Teilerfläche aufweist, sodass diese zweite Zone für Strahlung aus dem Informationskanal komplett durchlässig ausgebildet ist.

Weist das Beobachtungsgerät eine Strichplatte zur Bereitstellung von Azimut- und/oder Elevationswinkel im Gesamtbild auf, so werden durch das menschliche Auge eines Beobachters im Allgemeinen diese Striche fokussiert. Zur Erzeugung einer scharfen Grenze zwischen den beiden Teilbereichen des Gesamtbildes ist daher die Strichplatte vorzugsweise in einer Kanalquerschnittebene möglichst nah an der Grenzkante zwischen erster und zweiter Zone der Kombinationsoptik positioniert. Im Speziellen kann das Strichmuster auch direkt auf der Kombinationsoptik angeordnet - z.B. eingeätzt - sein. Dadurch wird nun bei Fokussierung des Strichmusters ein im Wesentlichen scharfes Abbild der Grenzkante zwischen den beiden Teilbereichen im Gesamtbild erzeugt.

Wie nach dem Stand der Technik hinlänglich bekannt ist im Beobachtungsgerät im Allgemeinen eine Okulareinheit vorgesehen, über welche das erzeugte kombinierte Gesamtbild ins Auge des Anwenders projiziert werden kann. Die Okulareinheit kann dabei aus mehreren optischen Elementen, wie Konvex- und Konkavlinsen zusammengesetzt sein. Das von Objekten ausgehende Licht wird in einer Ausführungsform des erfindungsgemässen Geräts im Tagsichtkanal insbesondere über mehrere Objektivlinsen eingesammelt, mittels optischer Komponenten, wie Prismenelementen, planparallelen Platten, etc., zur Kombinationsoptik geleitet und mittels der ersten Zone der Kombinationsoptik in den Anzeigekanal bzw. zum Okular gelenkt, wo es als Tagsicht-Abbildung verfügbar ist.

Das erfindungsgemässe Beobachtungsgerät ist insbesondere als handhaltbares monokulares Fernrohr oder binokularer Feldstecher ausgebildet.

Zusätzlich können dabei weitere gattungsgemäss übliche Komponenten - z.B. ein Laserentfernungsmesser zum Messen der Entfernung zu einem angepeilten Ziel, ein digitaler Kompass, ein Neigungsmesser oder ein Zusatzbeleuchter wie ein Infrarot-Illuminator - in das Beobachtungsgerät integriert sein. Zum Einspielen von extern gespeicherten oder generierten Bildinformationen können kabellose Verbindungen oder Kabelverbindungen zum Beobachtungsgerät vorgesehen sein, sodass die externen Bild-Daten an das Gerät übermittelt und durch das integrierte Display dem Benutzer bereitgestellt werden können.

Das erfindungsgemässe Verfahren und die erfindungsgemässe Vorrichtung werden nachfolgend anhand von in den Zeichnungen schematisch dargestellten konkreten Ausführungsbeispielen rein beispielhaft näher beschrieben, wobei auch auf weitere Vorteile der Erfindung eingegangen wird. Im Einzelnen zeigen:
- Fig.1: ein als binokularer Feldstecher ausgebildetes Beobachtungsgerät;
- Fig.2: eine Zusammenführung von Tagsichtkanal und Displaykanal mit zwei Displays gemäss dem Stand der Technik;
- Fig.3: die erfindungsgemässe Aufteilung des bereitgestellten Gesamtbildes in Überlagerungsbereich und Displaybereich;
- Fig.4a: eine erfindungsgemässe Ausführungsform der Kombinationsoptik mir Strahlteilerfläche, wobei nur auf einem die erste Zone bildenden Teil der Strahlteilerfläche eine teildurchlässige Beschichtung aufgebracht ist;
- Fig.4b: die nur in einem oberen Teilbereich beschichtete Strahlteilerfläche der Kombinationsoptik aus Figur 4a;
- Fig.5: eine weitere erfindungsgemässe Ausführungsform der Kombinationsoptik mit eingraviertem Strichmuster;
- Fig.6: eine weitere erfindungsgemässe Ausführungsform der Kombinationsoptik mit dem dadurch erzeugbaren kombinierten Gesamtbild;
- Fig.7: eine weitere erfindungsgemässe Ausführungsform der Kombinationsoptik mit vorgeordneter Strichplatte;
- Fig.8: eine weitere erfindungsgemässe Ausführungsform der Kombinationsoptik mit einer teildurch- lässigen bzw. teilreflektierenden Beschichtung auf einem ersten Teilbereich und einer total- reflektierenden Beschichtung auf einem zweiten Teilbereich; und
- Fig.9: eine weitere Ausführungsform mit verschiebbarer Kombinationsoptik.

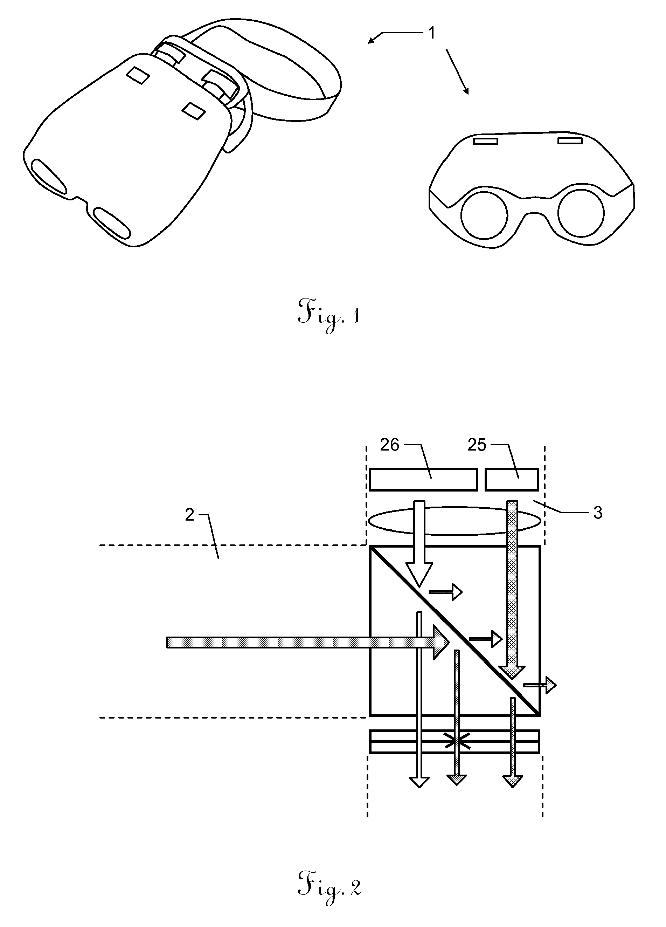

Figur 1 zeigt eine Aussenansicht eines gattungsgemässen binokularen Feldstechers 1. Wie nach dem Stand der Technik bekannt, weist der Feldstecher 1 ein kompaktes Gehäuse auf und ist daher für den Einsatz im Feld geeignet.

Insbesondere kann der Feldstecher 1 dabei zusätzlich zur Tagsicht-Beobachtungsfunktion weitere Funktionen aufweisen, beispielsweise einen Laserentfernungsmesser, einen Neigungsmesser, einen elektronischen Kompass, einen Höhenmesser, einen Barometer, eine Nachtsicht-Funktion sowie - bei einem die Erfindung betreffenden Gerät - ein elektronisches Display zum Einspielen von Zusatzinformation.

Figur 2 zeigt einen gemäss dem Stand der Technik bekannten Ansatz zur Lösung des Zielkonfliktes, dass zur klaren und deutlichen Einspielung von Zusatzinformationen in ein Tagsichtbild zwar ein genügend helles und kontrastreiches Displaybild mit den Zusatzinformationen bereitgestellt werden soll, gleichzeitig jedoch - zum Ermöglichen eines möglichst kompakten und leichten Geräts mit langen Betriebszeiten - den Energieverbrauch des verwendeten Displays möglichst gering zu halten.

Dafür weist die in Figur 2 dargestellte Lösung nach dem Stand der Technik im Informationskanal 3 zwei separate Displays 25,26 auf. Ein erstes Display 25, das ein helles Bild bereitstellen kann, jedoch einen verhältnismässig hohen Energieverbrauch aufweist, ist dabei zur Einspielung von kleinstrukturierten Informationen wie z.B. Text vorgesehen, welcher zur deutlichen Erkennbarkeit einen hohen Kontrast zum Tagsichtbild und somit eine sehr hohe Helligkeit benötigt. Beispielsweise kann dafür ein Display mit leuchtkräftigen LEDs eingesetzt werden.

Anhand des zweiten vorhandenen Displays 26 - das eine geringe Energiekonsumption, jedoch auch eine geringere Helligkeit aufweist - werden hingegen grobstrukturierte Informationen eingespielt, die auch bei geringerem Kontrast zum Tagsichtbild gut erkennbar sind. Zum Beispiel kann dafür ein OLED-Display (d.h. ein Display aus organischen Leuchtdioden) verwendet werden. Dadurch wird nun lediglich bei einer Einspielung von hochaufgelöster, kleinstrukturierter Informationen in das Tagsichtbild das Einschalten des ersten, hellen Displays 25 notwendig und bei sonstigen Informationseinspielungen das zweite, energiesparsame Display 26 verwendet, wodurch gegenüber einer Lösung - die ausschliesslich das helle Display 25 aufweist - ein geringerer gemittelter Energieverbrauch erreicht werden kann.

Die Zusammenführung des die beiden Displays 25,26 aufweisenden Informationskanals mit dem Tagsichtkanal erfolgt dabei anhand eines Strahlteilers mit einer beschichteten halbdurchlässigen Teilerfläche.

Da bei häufiger Bereitstellung beispielsweise von TextInformationen jedoch die in Figur 2 gezeigte Ausführungsform - mit zwei verschiedenartigen Displays - dennoch das häufige Verwenden des den hohen Energieverbrauch aufweisenden, hellen Displays erforderlich ist, können dadurch keine Vorteile gegenüber einer Lösung mit einem einzigen Display, das eine hohe Helligkeit aufweist, erzielt werden. Daher können in diesem Fall entweder lediglich verhältnismässig kurze Betriebszeiten erzielt werden oder ist ein Einsatz von verhältnismässig schweren und grossen Batterien bzw. Akkumulatoren erforderlich.

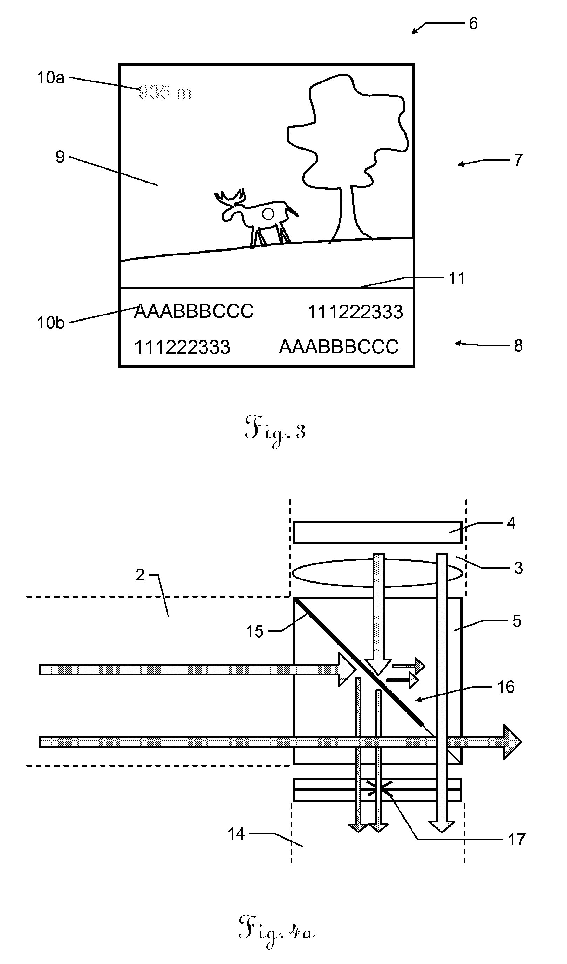

Figur 3 zeigt eine erfindungsgemässe Aufteilung des durch das Beobachtungsgerät bereitgestellten kombinierten Gesamtbildes 6 aus Tagsichtbild 9 und Displaybild 10a,10b. Dabei weist das kombinierte Gesamtbild 6 eine Aufteilung in zwei Bereiche 7,8 auf. Einer der beiden Bereiche 7 - im Allgemeinen der flächengrössere Bereich - ist dabei ausgebildet zur Anzeige einer Überlagerung aus Tagsichtbild 9 und einem zur Einspielung in das Tagsichtbild 9 vorgesehenen Teil des Displaybildes 10a. Ein - insbesondere scharf vom ersten getrennter - zweiter Bereich 8 des kombinierten Gesamtbildes 6 ist hingegen zur ausschliesslichen Anzeige eines zweiten Teiles des Displaybildes 10b ausgebildet, wobei der zweite Bereich 8 zur Bereitstellung von feinstrukturierter Information - wie Textinformation - vorgesehenen ist.

Da im zweiten Bereich 8 erfindungsgemäss keine Überlagerung mit dem - die Helligkeit des Displaybildes meist weit überschreitenden und somit feinstrukturierte Displaybildinformation verundeutlichenden - Tagsichtbildes 9 erfolgt, kann in diesem ausschliesslich zur Anzeige eines Teiles des Displaybildes vorgesehenen Bereich 8 auch bei Verwendung eines einzigen energiesparenden Displays eine klare und deutliche Bereitstellung von feinstrukturierter Displaybildinformatoin erfolgen.

Gemäss der Erfindung wird also ein Beobachtungsgerät bereitgestellt, das unter Verwendung eines - insbesondere einzigen - energiesparenden elektronischen Displays dem Benutzer ein kombiniertes Gesamtbild 6 zur Verfügung stellt, das sowohl einen - beispielsweise ungefähr 80 % des Gesamtbildes 6 ausmachenden - Tagsicht-Display-Bereich 7 mit dem Tagsichtbild 9 und darin einspielbarer Zusatzinformation aufweist, als auch - gleichzeitig und im Speziellen unterhalb des Tagsicht-Display-Bereichs 7 - einen Informationsbereich bzw. reinen Displaybereich 8, der bei genanntem Beispiel etwa 20 % des Gesamtbildes 6 darstellt. Insbesondere erfolgt die Erzeugung der beiden voneinander getrennten Bereiche derart, dass eine scharfe Grenze 11 zwischen Tagsicht-Display-Bereich 7 und ausschliesslichem Displaybereich 8 entsteht.

Dadurch kann nun ein Beobachtungsgerät mit klarer und deutlicher Informationseinspielung bei dennoch geringer Energiekonsumption bereitgestellt werden, wodurch sowohl ein Einsatz von geringe Ausmasse aufweisenden, leichten Energieversorgern ermöglicht wird als auch lange Betriebszeiten erzielt werden können.

Des Weiteren wird erfindungsgemäss ermöglicht - beispielsweise bei verschlossenem Tagsichtkanal oder bei Nacht - auch ausschliesslich das gesamte Displaybild 10a,10b über den gesamten Bereich des kombinierten Gesamtbildes 6 anzuzeigen. Dieser Modus eignet sich insbesondere zum Anzeigen eines Wärmebildes oder Nachtsicht-Bildes, einer Karte, eines Videos, etc.

Ebenso ist erfindungsgemäss ein Modus erzeugbar, in welchem im Überlagerungsbereich 7 (dem Tagsicht-Display-Bereich) des kombinierten Gesamtbildes 6 ausschliesslich das Tagsichtbild 9 angezeigt wird, wobei im ausschliesslichen Displaybereich 8 parallel dazu Zusatzinformationen einspielbar sind. Dazu kann der zur Überlagerung vorgesehene Teil des Displays 10a dunkel bleiben und jener Teil des Displays 10b, welcher im reinen Displaybereich 8 des kombinierten Gesamtbildes 6 abgebildet wird, die Zusatzinformationen bereitstellen.

Figur 4a zeigt eine erste erfindungsgemässe Ausführungsform zur Erzeugung des kombinierten Gesamtbildes mit Tagsicht-Display-Bereich und ausschliesslichem Displaybereich.

Dafür weist das Beobachtungsgerät einen Tagsichtkanal 2 und einen Informationskanal 3 mit einem einzigen energiesparenden grafischen Display 4 - mit nachgeordneter Displayoptik - zur Erzeugung eines Displaybildes auf.

Zur Zusammenführung des Tagsichtkanals 2 und des Informationskanals 3 ist zwischen Tagsichtkanal 2 und Informationskanal 3 eine Kombinationsoptik 5 vorgesehen.

Die Kombinationsoptik 5 weist dabei erfindungsgemäss eine erste Zone zur Überlagerung mindestens eines Teils des Tagsichtbildes mit einem ersten Teil des Displaybildes sowie eine zweite Zone zum ausschliesslichen Bereitstellen eines zweiten Teils des Displaybildes auf. Dadurch wird die erfindungsgemässe Aufteilung des kombinierten Gesamtbildes erzielt in den - durch die erste Zone erzeugten - Tagsicht-Display-Bereich (bzw. Überlagerungsbereich) und den vom diesem Bereich getrennten - durch die zweite Zone der Kombinationsoptik erzeugten - ausschliesslichen Display-bereich.

Wie in Figur 4a dargestellt kann die Kombinationsoptik 5 dafür als Strahlteilerprisma mit einer sich über den gesamten Strahlquerschnitt des Tagsicht- und Informationskanals erstreckenden Strahlteilerfläche 16 ausgebildet sein, die in zwei unterschiedliche Teilbereiche aufgeteilt ist.

Dabei weist ein erster Teilbereich der Strahlteilerfläche 16 - der die erste Zone der Kombinationsoptik 5 bildet - eine teildurchlässige Beschichtung 15 auf, sodass in diesem Bereich - sowohl aus dem Tagsichtkanal 2 als auch aus dem Informationskanal 3 - auftreffende Strahlung jeweils teilweise und ggf. überlagert in den Anzeigekanal 14 gelenkt wird.

Ein zweiter Teilbereich der Strahlteilerfläche 16 - der die zweite Zone der Kombinationsoptik bildet - ist beispielsweise nicht beschichtet, sodass aus dem Informationskanal 3 auftreffende Strahlung - insbesondere unabgelenkt und vollständig - in den Anzeigekanal 14 geführt wird. Auf diesem Teilbereich aus dem Tagsichtkanal 2 auftreffende Strahlung wird ebenso unabgelenkt und insbesondere vollständig transmittiert, sodass diese nicht in den Anzeigekanal 14 gelenkt bzw. am Anzeigekanal 14 vorbeigeführt wird. Zusätzlich kann die durch die zweite Zone am Anzeigekanal 14 vorbeigeführte Tagsichtkanal-Strahlung beispielsweise durch ein AbsorberMaterial absorbiert werden, sodass diese nicht an Strahlungsführungs-Wänden reflektiert oder gestreut wird. Dadurch kann verhindert werden, dass reflektierte oder gestreute Anteile der erfindungsgemäss am Anzeigekanal 14 vorbeigeführten Tagsichtkanal-Strahlung störend in den Anzeigekanal gelangen. Entsprechend einer weiteren Ausführungsform kann zusätzlich ein Helligkeitssensor derart nach der Kombinationsoptik angeordnet werden, sodass die Helligkeit der durch die zweite Zone am Anzeigekanal vorbeigeführten Tagsichtkanal-Strahlung gemessen werden kann.

Bei einer alternativen Zusammenführungsweise von Informations- und Tagsichtkanal 3,2 in den Anzeigekanal 14 kann die zweite Zone der Kombinationsoptik anstatt transmittiv auch totalreflektierend ausgebildet sein, sodass wiederum aus dem Informationskanal 2 dort auftreffende Strahlung vollständig in den Anzeigekanal 14 gelenkt und aus dem Tagsichtkanal 2 dort auftreffende Strahlung nicht in den Anzeigekanal 14 geführt wird.

Wie nach dem Stand der Technik bekannt kann dem Strahlteilerprisma eine Strichplatte 17 nachgeordnet sein, durch die im kombinierten Gesamtbild ein Strichmuster erzeugt wird und somit Informationen bezüglich Azimut-und/oder Elevationswinkel bereitgestellt werden können.

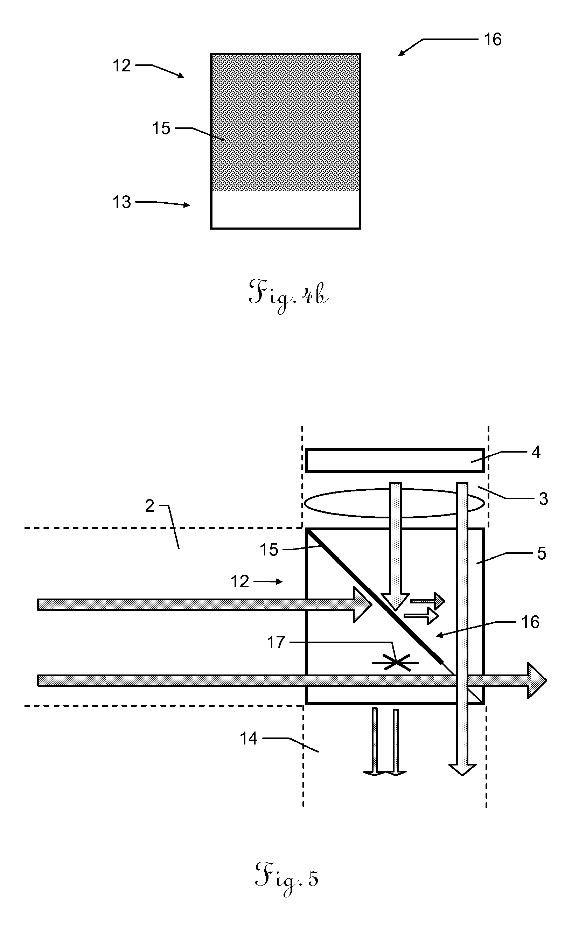

Figur 4b zeigt eine Aufsicht der im Strahlteilerprisma aus Figur 4a vorgesehenen Strahlteilerfläche 16. Der gepunktet dargestellte erste Bereich 12, der - wie bereits beschrieben - die erste Zone des Strahlteilerprismas 16 bildet, weist dabei die teildurchlässige Beschichtung 15 - insbesondere mit vorgegebenem Transmissions- und Reflexionsverhältnis - auf, wohingegen der der untere Bereich 13 der Strahlteilerfläche transmittiv ausgebildet ist und beispielsweise nicht beschichtet ist. Z.B. kann dafür die teildurchlässige Beschichtung 15 nur auf dem oberen Teil 12 der Fläche 16 aufgedampft werden.

In Figur 5 ist die Kombinationsoptik 5 aus Figur 4a dargestellt, wobei hier die Strichplatte nicht nach der Kombinationsoptik 5 angeordnet ist, sondern ein Strichmuster 17 - beispielsweise mittels Lasergravur - direkt in das Strahlteilerprisma integriert ist.

Gemäss einer Weiterbildung der Erfindung ist dabei die das Strichmuster 17 bildende Lasergravur in einer Ebene vorgesehen, die parallel zu und möglichst nah an der Grenzlinie zwischen dem beschichteten und dem nicht beschichteten Bereich verläuft, im Speziellen wobei die Strichmuster-Ebene die Grenzlinie - die die erste Zone der Kombinationsoptik von der zweiten Zone trennt - beinhaltet.

Da durch die Augen eines Benutzers die Strichmuster-Ebene fokussiert wird, befindet sich - bei der beschriebenen Anordnungsweise des Strichmusters nahe der Grenzlinie - die Fokussierungsebene ebenso nahe dieser Grenzlinie zwischen erster und zweiter Zone, wodurch ein scharfes Abbild der Grenzlinie bzw. eine scharf dargestellte Trennung zwischen Tagsicht-Display-Bereich und reinem Displaybereich im kombinierten Gesamtbild erzeugt wird. Dies erlaubt einem Benutzer eine klare und deutliche Darstellungsweise des Gesamtbildes und ein vereinfachtes Erkennen der im Displaybereich anzeigbaren Informationen.

In einem Tagsichtmodus, d.h. bei Tag und bei geöffnetem Tagsichtkanal, kann nun im Tagsicht-Display-Bereich ein Tagsichtbild bereitgestellt werden. Bei Bedarf kann anhand des Displays - im zur Überlagerung vorgesehenen, ersten Teil des Displays - zusätzlich Überlagerungsinformation angezeigt werden. Im ausschliesslichen Displaybereich wird hingegen nur ein vom zweiten Teil des Displays erzeugtes Displaybild - insbesondere Textinformationen - angezeigt.

In einem Nachtsichtmodus, d.h. bei Nacht und/oder bei verschlossenem Tagsichtkanal, wird die dem Benutzer bereitgestellte Anzeige komplett durch das Display erzeugt, wobei sich verschiedene Anzeige-Optionen ergeben. Beispielsweise kann durch den ersten Teil des Displays eine Karte oder ein Infrarot-Bild angezeigt und durch den zweiten Teil, der im ausschliesslichen Displaybereich angezeigt wird, Textinformation bereitgestellt werden. Alternativ kann auch ein zusammenhängendes Displaybild über den gesamten Anzeigebereich des Beobachtungsgeräts durch das Display erzeugt werden, wofür - aufgrund der teilweise vorhandenen Beschichtung - vorteilhaft allerdings eine Intensitätsanpassung der durch den ersten und zweiten Teil des Displays erzeugten Teilbilder erfolgen kann. Das derart erzeugte zusammenhängende Displaybild - durch das z.B. ein Wärmebild oder ein gespeichertes Photo anzeigt wird - kann selbstverständlich wiederum elektronisch überlagerte Textinformationen aufweisen.

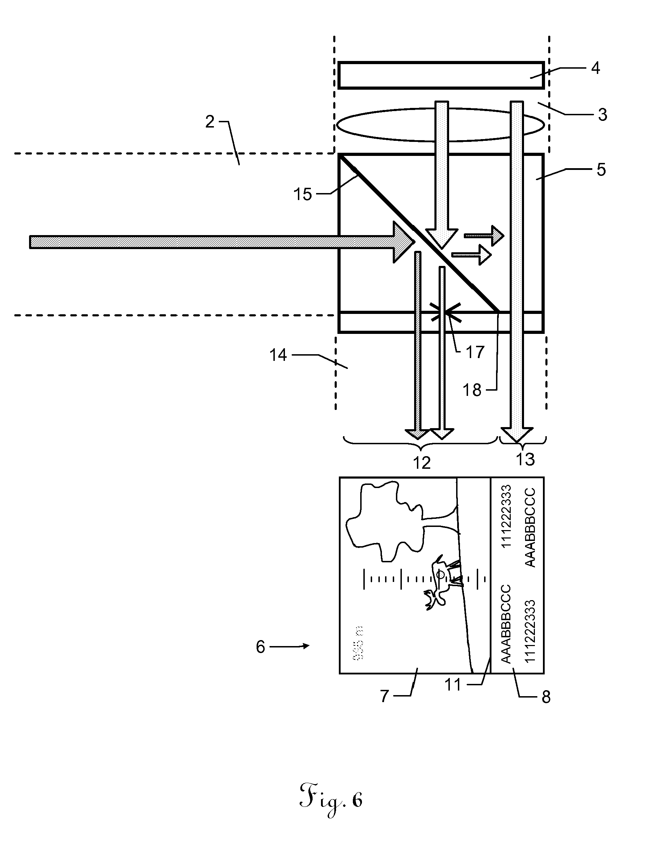

In Figur 6 ist eine alternative Ausführungsform der Kombinationsoptik 5, die nun durch ein spezielles Strahlteilerprisma gebildet wird, dargestellt. Das Strahlteilerprisma ist dabei derart ausgebildet und zwischen Tagsicht- und Informationskanal 2,3 angeordnet, dass sich die erste Zone 12 - mit einer Strahlteilerfläche mit teildurchlässiger Beschichtung 15 - über den gesamten Querschnitt des Tagsichtkanals 2, jedoch nur über einen Teil des Querschnitts des Informationskanals 3 erstreckt. Hingegen weist die zweite Zone 13 keine Teilerfläche auf und ist - in einen für die Informationskanalstrahlung relevanten Wellenlängenbereich - komplett transmittiv ausgebildet und erstreckt sich dabei über den restlichen Teil des Informationskanal-Querschnitts.

Dadurch kann wiederum die erfindungsgemässe Aufteilung des durch die Kombinationsoptik 5 erzeugten kombinierten Gesamtbildes 6 in Tagsicht-Display-Bereich 7 (bzw. Überlagerungsbereich) und reinen Displaybereich 8 erzeugt werden.

Durch eine dem Prisma direkt nachgeordnete Anordnung der Strichplatte 17 kann wiederum der bereits anhand von Figur 5 beschriebene erfindungsgemässe Effekt erzielt werden, dass die Grenzkante 18 zwischen erster und zweiter Zone 12,13 in derselben Fokussierungsebene wie die Strichplatte 17 angeordnet ist, wodurch wiederum eine scharfe Abbildung der Grenze 11 bzw. Trennung der beiden erfindungsgemässen Bildbereiche 7,8 im Gesamtbild 6 bewirkt wird.

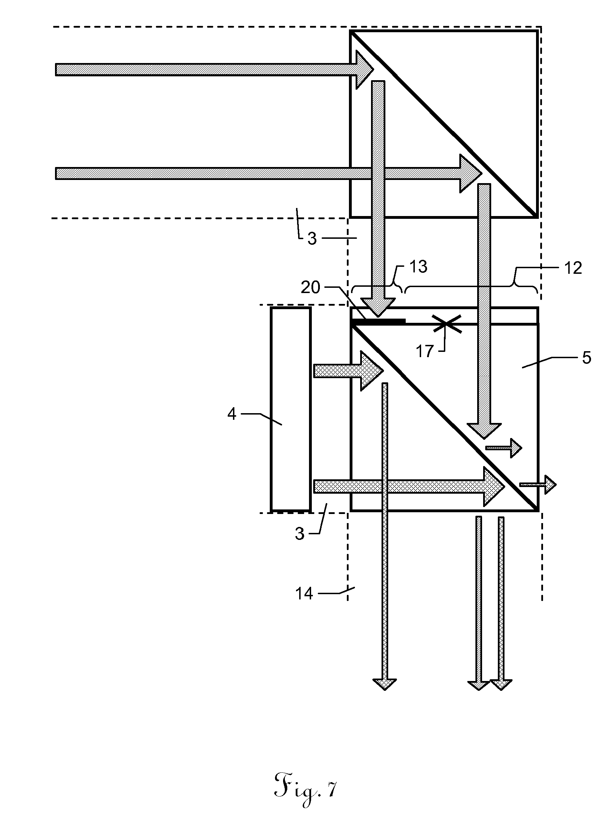

Figur 7 zeigt eine weitere erfindungsgemässe Ausführungsform der Kombinationsoptik 5 mit vorgeordneter Strichplatte 17 mit beispielsweise eingeätztem Strichmuster, wobei zur Erzeugung des reinen Displaybereiches die Kombinationsoptik 5 in der Strichplatten-Ebene einen opaken Bereich 20 aufweist, sodass im Displaybereich des kombinierten Gesamtbildes ausschliesslich ein Teil des Display-Bildes dargestellt wird und keine Überlagerung mit Tagsichtbild erfolgt.

Beispielsweise kann dafür die Strichplatte 17 oder das die Kombinationsoptik 5 darstellende Strahlteilerprisma eine - die zweite Zone bereitstellende - lichtundurchlässige Beschichtung 20 aufweisen. Da auch bei dieser Ausführungsform der Kombinationsoptik 5 die Strichplatte 17 wiederum in einer Ebene angeordnet ist, welche die Grenzlinie zwischen erster und zweiter Zone der Kombinationsoptik 5 beinhaltet, wird wiederum ein scharf vom Tagsicht-Display-Bereich getrennter ausschliesslicher Displaybereich im kombinierten Gesamtbild bereitgestellt.

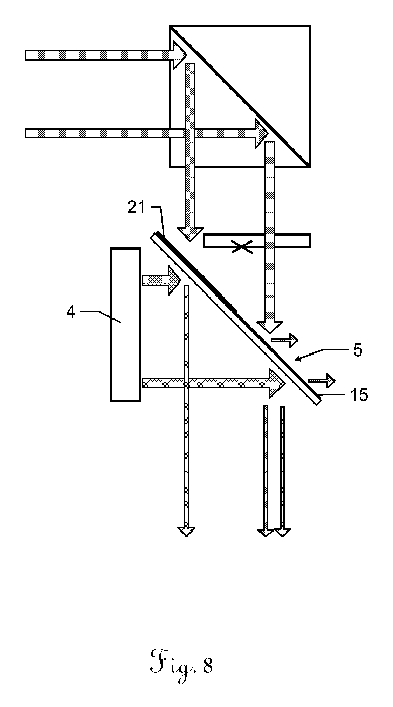

In Figur 8 ist eine weitere alternative Ausführungsform mit einer zwei unterschiedlich beschichtete Teilbereiche aufweisenden Strahlteilerfläche als Kombinationsoptik 15 dargestellt. Ein erster Teilbereich weist dabei eine teildurchlässige bzw. teilreflektierende Beschichtung 15 auf. Durch diesen Bereich der Kombinationsoptik wird der Tagsicht-Display-Bereich im Gesamtbild erzeugt. Der zweite Teilbereich weist hingegen eine z.B. spiegelnde Beschichtung 21 auf, sodass Displaybildinformations-Strahlen vollständig in den Anzeigekanal gelenkt werden und somit der reine Displaybereich im Gesamtbild erzeugt wird. Aus dem Tagsichtkanal auf diesem spiegelnd beschichteten Bereich auftreffende Strahlen werden hingegen weggelenkt, sodass im reinen Displaybereich des Gesamtbildes erfindungsgemäss ausschliesslich ein Teil des Bildes des Displays 4 darstellt und eine Überlagerung mit einem meist verhältnismässig hellen Tagsichtbild verhindert wird. Dadurch kann eine klare und deutliche Erkennbarkeit der bereitzustellenden Informationen im reinen Displaybereich des Gesamtbildes gewährleistet werden.

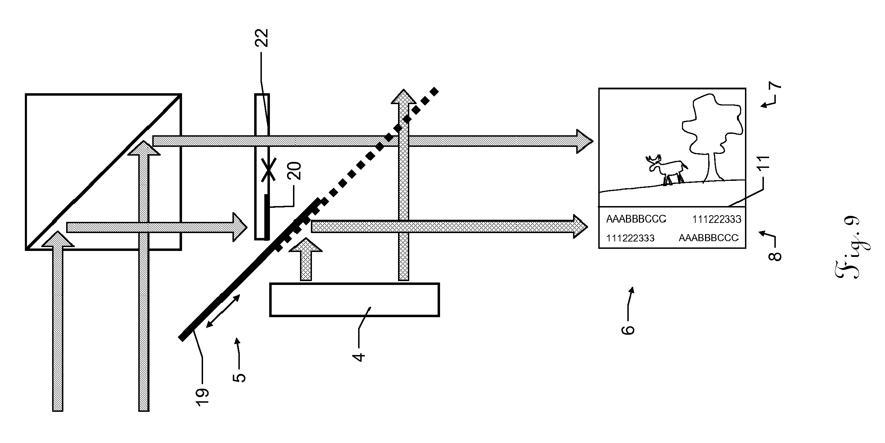

Figur 9 zeigt eine weitere Ausführungsform mit verschiebbarer Kombinationsoptik 5.

Die Kombinationsoptik 5 ist dabei derart zwischen Tagsichtkanal und Informationskanal verschiebbar angeordnet, sodass in einer - gestrichelt dargestellten - ersten Stellung der Kombinationsoptik 5 ausschliesslich ein Displaybild im gesamten Anzeigebereich (d.h. in beiden Teilbereichen des kombinierten Gesamtbildes 6) bereitgestellt wird. Elektronisch kann dabei das durch das Display erzeugte zusammenhängende Displaybild dennoch in zwei Teile aufgeteilt sein (z.B. in einen Nachtsichtbild-Bereich und einen Informationsbereich). In einer zweiten Stellung der Kombinationsoptik 5 werden hingegen im Tagsicht-Display-Bereich des kombinierten Gesamtbildes 6 ausschliesslich das Tagsichtbild und im reinen Displaybereich ausschliesslich ein Teil des Displaybildes angezeigt.

Dadurch ist nun eine erfindungsgemässe Aufteilung des Gesamtbildes 6 möglich, bei der im Tagsicht-Display-Bereich 7 - alternativ wählbar - entweder das Tagsichtbild oder ein erster Teil des Displaybildes bereitgestellt wird. Im ausschliesslichen Displaybereich 8 wird dabei stets ein zweiter Teil des durch das Display 4 erzeugten Display-bildes angezeigt.

Beispielsweise ist die Kombinationsoptik 5 dafür als totalreflektierendes Element 19, insbesondere als Spiegel, ausgebildet, wobei das reflektierende Element 19 in der ersten - gestrichelt dargestellten - Stellung den gesamten Querschnitt von Tagsicht- und Informationskanal und in der zweiten Stellung nur einen Anteil des Querschnitts des Tagsichtkanals und des Informationskanals überdeckt.

Zusätzlich kann dabei in der Strichplattenebene 22 eine opake Beschichtung 20 vorgesehen sein, wobei die Beschichtung 20 einen geringfügig höheren Anteil des Kanal-Querschnitts überdeckt als das reflektierende Element 19 in seiner zweiten Stellung. Das bedeutet, dass diese opake Beschichtung 20 minimal über das reflektierende Element 19 in seiner zweiten Stellung hinausreicht, wodurch bei Fokussierung der Strichplattenebene 22 - beispielsweise durch das Auge eines Benutzers - wiederum eine scharfe Grenze 11 im Gesamtbild 6 zwischen dem Tagsichtbild und dem Displaybild entsteht.

Es versteht sich, dass diese dargestellten Figuren nur mögliche Ausführungsbeispiele schematisch darstellen. Die verschiedenen Ansätze können erfindungsgemäss miteinander sowie mit Verfahren bzw. Funktionen von gattungsgemässen Beobachtungsgeräten des Stands der Technik - wie beispielsweise Nachtsichtfunktion, Laserentfernungsmesser, elektronischer Kompass, etc. - kombiniert werden. Dabei wird in den dargestellten Figuren aus Gründen der deutlicheren Darstellungsweise und zum besseren Verständnis auf die Darstellung von weiteren gattungsgemäss vorhandenen Komponenten - wie beispielsweise weitere strahlformende bzw. strahlumlenkende Optiken in Tagsicht-, Display- und Anzeigekanal - weitgehend verzichtet.

## Patentansprüche

1. Beobachtungsgerät (1) mit mindestens
• einem Tagsichtkanal (2),
• einem Informationskanal (3) mit einem grafischen elektronischen Display (4) zur Erzeugung eines Displaybildes und
• einer Kombinationsoptik (5) zur Zusammenführung des Tagsichtkanals (2) und des Informationskanals (3), sodass ein kombiniertes Gesamtbild (6) entsteht,
**dadurch gekennzeichnet, dass**
die Kombinationsoptik (5) derart ausgebildet und angeordnet ist, dass das Gesamtbild (6) aufgeteilt ist in
• einen Tagsicht-Display-Bereich (7), in dem
□ alternativ wählbar das Tagsichtbild (9) oder ein erster Teil des Displaybilds (10), und/oder
□ eine Überlagerung aus mindestens einem Teil des Tagsichtbildes (9) mit dem ersten Teil des Displaybildes (10)
anzeigbar ist, und
• einen ausschliesslichen Displaybereich (8), in dem nur ein zweiter Teil des Displaybildes (10) bereitgestellt wird.

2. Beobachtungsgerät (1) nach Anspruch 1,
**dadurch gekennzeichnet, dass**
die Kombinationsoptik (5) derart ausgebildet und angeordnet ist, dass das Gesamtbild (6) eine scharfe Grenze (11) zwischen dem Tagsicht-Display-Bereich (7) und dem ausschliesslichen Displaybereich (8) aufweist.

3. Beobachtungsgerät (1) nach Anspruch 1 oder 2,
**dadurch gekennzeichnet, dass**
die Kombinationsoptik (5) eine erste und eine zweite Zone (12,13) aufweist, wobei
• durch die erste Zone (12) der Tagsicht-Display-Bereich (7) und
• durch die zweite Zone (13) der ausschliessliche Displaybereich (8)
erzeugt wird.

4. Beobachtungsgerät (1) nach Anspruch 3,
**dadurch gekennzeichnet, dass**
die erste Zone (12) der Kombinationsoptik (5) eine teildurchlässige Fläche (14) aufweist - insbesondere mit vorgegebenem Transmissions- und Reflexionsverhältnis -, sodass auf der ersten Zone (12) auftreffende Strahlung aus dem Tagsichtkanal (2) und aus dem Informationskanal (3) in einen kombinierten Anzeigekanal (14) gelenkt werden.

5. Beobachtungsgerät (1) nach Anspruch 3 oder 4,
**dadurch gekennzeichnet, dass**
die zweite Zone (13) der Kombinationsoptik (5) aus dem Informationskanal (3) auftreffende Strahlen in den Anzeigekanal (14) lenkt, insbesondere wobei die zweite Zone (13) transmittiv oder totalreflektierend ausgebildet ist.

6. Beobachtungsgerät (1) nach einem der Ansprüche 3 bis 5,
**dadurch gekennzeichnet, dass**
aus dem Tagsichtkanal (2) auf der zweiten Zone (13) auftreffende Strahlen am Eintritt in den Anzeigekanal (14) gehindert - insbesondere an diesem vorbeigelenkt - werden.

7. Beobachtungsgerät (1) nach einem der Ansprüche 3 bis 6,
**dadurch gekennzeichnet, dass**
die Kombinationsoptik (5) über den gesamten Strahlquerschnitt des Tagsicht- und Informationskanals (2,3) eine Strahlteilerfläche (16) aufweist, wobei
• ein erster Teilbereich der Strahlteilerfläche (16) - als die erste Zone (12) - eine teildurchlässige Beschichtung (15) aufweist, sodass in diesem Bereich auftreffende Strahlung - sowohl aus dem Tagsichtkanal als auch aus dem Informationskanal - teilweise in den Anzeigekanal gelenkt werden und
• ein zweiter Teilbereich der Strahlteilerfläche (16) als die zweite Zone (13) nicht beschichtet ist, sodass
□ aus dem Informationskanal (3) auftreffende Strahlen - insbesondere ohne Ablenkung - in den Anzeigekanal (14) geführt und
□ aus dem Tagsichtkanal (2) auftreffende Strahlen am Anzeigekanal (14) vorbeigeführt werden.

8. Beobachtungsgerät (1) nach einem der Ansprüche 3 bis 5,
**dadurch gekennzeichnet, dass**
die erste Zone (12) der Kombinationsoptik (5) - mit einer Strahlteilerfläche (16) mit teildurchlässiger Beschichtung (15) - sich über den gesamten Querschnitt des Tagsichtkanals (2), jedoch nur über einen Teil des Querschnitts des Informationskanals (3) erstreckt.

9. Beobachtungsgerät (1) nach einem der Ansprüche 3 bis 8,
**dadurch gekennzeichnet, dass**
die Kombinationsoptik (5) ein Strichmuster (17) in einer Strahlquerschnittsebene aufweist, die eine die beiden Zonen (12,13) trennende Grenzkante (18) enthält oder in verhältnismässig unmittelbarer Nähe parallel zur Grenzkante (18) verläuft, sodass bei Fokussierung des Strichmusters (17) ein im Wesentlichen scharfes Abbild der Grenzkante (18) im Gesamtbild (6) erzeugt wird.

10. Beobachtungsgerät (1) nach einem der vorangehenden Ansprüche,
**dadurch gekennzeichnet, dass**
der Informationskanal (3) nur das eine einzige grafische elektronische Display (4) aufweist - zur Bereitstellung
• sowohl des - insbesondere zur Überlagerung mit dem Tagsichtbild (9) vorgesehenen - ersten Teiles (10a) des Displaybildes (10)
• als auch des zur unüberlagerten Anzeige vorgesehenen zweiten Teiles (10b) des Displaybildes (10).

11. Beobachtungsgerät (1) nach einem der vorangehenden Ansprüche,
**dadurch gekennzeichnet, dass**
die Kombinationsoptik (5) verschiebbar zwischen Tagsichtkanal (2) und Informationskanal (3) angeordnet und derart ausgebildet ist, sodass
• in einer ersten Stellung der Kombinationsoptik (5) sowohl im Tagsicht-Display-Bereich (7) als auch im ausschliesslichen Displaybereich (8) nur das Displaybild (10) angezeigt wird, und
• in einer zweiten Stellung der Kombinationsoptik (3) im Tagsicht-Display-Bereich (7) ausschliesslich das Tagsichtbild (9) und im ausschliesslichen Displaybereich (8) ausschliesslich der zweite Teil (10b) des Displaybildes (10) angezeigt wird.

12. Beobachtungsgerät (1) nach Anspruch 11,
**dadurch gekennzeichnet, dass**
die Kombinationsoptik (5) als totalreflektierendes Element (19), insbesondere als Spiegel, ausgebildet und verschiebbar zwischen Tagsichtkanal (2) und Informationskanal (3) angeordnet ist, wobei das reflektierende Element (19)
• in der zweiten Stellung nur einen Anteil des Querschnitts des Tagsichtkanals (2) und des Informationskanals (3) überdeckt und
• in der ersten Stellung insbesondere den gesamten Querschnitt von Tagsicht- und Informationskanal (2,3) überdeckt.

13. Beobachtungsgerät (1) nach einem der vorangehenden Ansprüche,
**dadurch gekennzeichnet, dass**
das Beobachtungsgerät (1) als handhaltbares Binokular ausgebildet ist.
